# EUROPÄISCHE PATENTSCHRIFT

(11) **EP 4 610 081 B1**
(45) Veröffentlichungstag und Bekanntmachung des Hinweises auf die Patenterteilung: **24.12.2025**
(21) Anmeldenummer: 25153885.6
(22) Anmeldetag: 24.01.2025
(51) Int. Cl.: B60K 15/05

(54) **ÖFFNUNGS- UND SCHLIESSVORRICHTUNG FÜR EIN KRAFTFAHRZEUG**
OPENING AND CLOSING DEVICE FOR A MOTOR VEHICLE
DISPOSITIF D'OUVERTURE ET DE FERMETURE POUR VÉHICULE AUTOMOBILE

(30) Priorität: 26.01.2024 DE 202024100401 U
(43) Veröffentlichungstag der Anmeldung: 03.09.2025
(73) Patentinhaber: Küster Holding GmbH, 35630 Ehringshausen (DE)
(72) Erfinder: Schmidt, Arthur, 35745 Herborn (DE)
(74) Vertreter: Weckenbrock, Matthias

(56) Entgegenhaltungen:
- DE-A1- 102023 100 577
- DE-B4- 102009 034 428

## Beschreibung

Die Erfindung betrifft eine Öffnungs- und Schließvorrichtung für ein Kraftfahrzeug nach dem Oberbegriff des Anspruchs 1.

Kraftfahrzeuge weisen an der Karosserie Klappen bzw. Deckel auf, die beispielsweise eine Lademulde bei elektrischen Fahrzeugen oder einen Tankstutzen bei Fahrzeugen mit Verbrennermotor abdecken. Die Klappe kann beispielsweise seitlich hochgeklappt werden, wenn das Elektrofahrzeug geladen werden soll und die Lademulde zugänglich sein muss. Im zugeklappten Zustand soll die Klappe die Lademulde vor Außen- und Umgebungseinflüssen möglichst gut abschirmen bzw. isolieren. Dazu ist gewöhnlich auch eine Dichtung vorgesehen, auf welcher die Klappe im geschlossenen Zustand aufsitzt.

Für das Laden eines Elektrofahrzeugs muss die Lademulde zum gewünschten Zeitpunkt zugänglich sein, insbesondere sollte der Fahrer die Klappe ohne die Anwendung von Werkzeugen öffnen können. Durch äußere Einflüsse wie extreme Kälte, Eis oder Schnee kann die Betätigung der Klappe stark erschwert werden. Insbesondere durch Vereisen kann das Öffnen und Schließen der Klappe erschwert werden. Beispielsweise bei starkem Schneefall kann beim Schließen der Klappe das Überbrücken der Dichtung schwierig durchzuführen sein.

Um den Benutzer beim Bedienen der Klappe maschinell zu unterstützen, können Aktuatoren verwendet werden. Die DE 10 2013 109 961 A1 offenbart eine Verriegelungsmechanik mit Kulisse und Verriegelungszapfen zum Geschlossenhalten von Deckeln in Kraftfahrzeugen.

Aus der DE 10 2013 212 772 A1 ist eine Schließvorrichtung für einen Handschuhkasten eines Fahrzeugs bekannt, welche eine motorisch antreibbare Drehachse mit mindestens einer Schneckenführung aufweist.

Auch aus der DE 10 2022 107 707 B3 ist eine Antriebsvorrichtung für eine Fahrzeugklappe bekannt.

Aus der DE 10 2021 002 425 A1 ist eine Fahrzeugklappe mit Öffnungs- und Schließvorrichtung bekannt, welche eine Öffnungs- und Schließvorrichtung mit einer Schiebe- und Schwenkvorrichtung umfasst, welche mit einem Zahnradgetriebe gekoppelt ist.

Die DE 10 2022 107 707 B3 betrifft eine Antriebsvorrichtung für eine Fahrzeugklappe, mittels der eine Öffnung einer Fahrzeugkarosserie verschließ- und freigebbar ist. Die Fahrzeugklappe führt in Einbaulage der Antriebsvorrichtung während einer Verstellung auf einer die Öffnung verschließenden Position in Richtung einer die Öffnung freigebenden Position zunächst eine Hubbewegung in Fahrzeugquerrichtung (y) nach innen und anschließend eine kombinierte Verschiebe- und Drehbewegung innerhalb der Fahrzeugkarosserie aus. Die nach innen öffnende Fahrzeugklappe ist mittels einer Kombination aus einem Drehgelenkmechanismus und einer Linearführung verstellbar, wobei der Drehgelenkmechanismus und ein Schlitten der Linearführung über eine Hebelanordnung von einer Antriebseinheit antreibbar sind. Die DE 10 2009 034428 B4 beschreibt eine Öffnungs-/ und Schließvorrichtung gemäß dem Oberbegriff des Anspruchs 1.

Der Erfindung liegt die Aufgabe zugrunde, eine Vorrichtung für ein Fahrzeug mit einer Klappe bereitzustellen, welche den Nutzer beim Öffnen und Schließen der Klappe unterstützt.

Diese Aufgabe wird gelöst mit einer Öffnungs- und Schließvorrichtung für ein Kraftfahrzeug nach Anspruch 1.

Die Erfindung betrifft eine Öffnungs- und Schließvorrichtung für ein Kraftfahrzeug, umfassend eine dreh- und/oder schwenkbar gelagerte Klappe, insbesondere eine Ladeklappe für ein Elektrofahrzeug. Die Klappe kann als Ladeklappe für eine elektrische Lademulde ausgebildet sein.

Die Klappe ist mit einem elektromotorischen Antrieb zwischen einer Öffnungs- und einer Schließstellung mittels einer translatorischen und rotatorischen Bewegung verstellbar.

Hierzu weist die Klappe wenigstens einen Mitnehmer auf, welcher für eine Verstellung der Klappe in eine Führungsstruktur einer, vorzugsweise zentrisch angetriebenen, Kulissenscheibe eingreift.

Darüber hinaus ist der Mitnehmer in einem Führungsabschnitt einer Führungsscheibe verschiebbar gelagert. Der Führungsabschnitt kann als Langloch, Öffnung oder Durchgangsloch mit zusätzlicher Abstützfunktion bzw. Führungsfunktion für den Mitnehmer ausgebildet sein. Der Führungsabschnitt bildet einen Freiheitsgrad zur Verlagerung des Mitnehmers. Optional kann der Mitnehmer auch in Öffnungen geführt werden.

Der Antrieb wirkt, vorzugsweise direkt, auf einen Antriebsfortsatz der Kulissenscheibe ein, so dass die Kulissenscheibe zur Verstellung der Klappe eine Drehbewegung ausführt und der mit der Klappe gekoppelte Mitnehmer in der Führungsstruktur und/oder in dem Führungsabschnitt der Führungsscheibe verlagert wird.

Die Erfindung betrifft also eine elektrisch verstellbare Klappe mit einer, insbesondere zentrisch angetriebenen Kulissenführung zur Erzeugung einer translatorischen und rotatorischen Bewegung der Klappe.

Die translatorische Bewegung dient dazu, die Klappe aus einer geschlossenen, mit der Karosserie bündigen Stellung, über eine Hubbewegung in eine zurückgezogene Stellung innerhalb der Fahrzeugkarosserie zu bewegen. In dieser zurückgezogenen Stellung geht die Hubbewegung in eine rotatorische Schwenkbewegung über, wodurch die Klappe innerhalb der Fahrzeugkarosserie bewegt wird und den Zugang, beispielsweise zu einer Ladedose eines Elektrofahrzeugs freigibt.

Dadurch wird eine kompakte Vorrichtung bereitgestellt, welche ohne separate parallele Führungsbahnen für die Ladeklappe auskommt. Darüber hinaus kann ebenfalls auf Zahnradgetriebe oder Mehrgelenkanordnungen verzichtet werden. Durch diese Maßnahmen wird erreicht, dass die erfindungsgemäße Vorrichtung wenig Bauraum benötigt.

Gemäß einer ersten Ausführungsvariante der Erfindung sind die Führungsstruktur der Kulissenscheibe und der Führungsabschnitt der Führungsscheibe zur Verlagerung des Mitnehmers derart ausgebildet, dass die mit dem Mitnehmer verbundene Klappe bei einer Bewegung von der Schließstellung in die Öffnungsstellung zunächst eine im Wesentlichen translatorische Bewegung und dann eine im Wesentlichen rotatorische Bewegung ausführt.

Bei der umgekehrten Bewegung, also von der Öffnungsstellung in die Schließstellung führt die Klappe zunächst eine rotatorische und dann eine lineare bzw. translatorische Bewegung aus, um in die vollständig geschlossene Position zu gelangen.

Die Bewegung von der Schließ- in die Öffnungsstellung kann auch als Öffnungsbewegung bezeichnet werden. Die Bewegung von der Öffnungs- in die Schließstellung kann auch als Schließbewegung bezeichnet werden.

Die lineare bzw. rotatorische Bewegung bzw. deren Dauer kann auch als translatorische Phase und die rotatorische Bewegung als rotatorische Phase bezeichnet werden.

Nach einer Weiterbildung der Erfindung ist der wenigstens eine Mitnehmer an einem Halte- und Führungselement der Klappe angeordnet, welcher sich vorzugsweise im Wesentlichen senkrecht gegenüber der Klappe erstreckt, wobei das Halte- und Führungselement mittels eines Führungsabschnitts in wenigstens einer, vorzugsweise nutförmigen, Linearführungseinrichtung einer Führungsscheibe für eine lineare Zwangsführung der Klappe geführt ist. Das Halte- und Führungselement kann Versteifungsrippen zur Stabilisierung aufweisen.

Es ist auch denkbar, dass mehrere solcher Linearführungseinrichtungen für unterschiedliche Bauteile vorgesehen sind.

Gemäß einer vorteilhaften Variante der Erfindung weist die Vorrichtung ein Anschlags- und Führungselement mit wenigstens einem weiteren Mitnehmer auf, welcher in einer Führungsstruktur der Kulissenscheibe verlagerbar und mit der Führungsscheibe gekoppelt ist.

Das Anschlags- und Führungselement weist einen in wenigstens einer Linearführungseinrichtung geführten Führungsabschnitt für die lineare Zwangsführung des Anschlags- und Führungselement auf.

Wie erwähnt, können auch mehrere Linearführungseinrichtungen vorgesehen sein, beispielsweise mehrere Nuten, in welchen Führungsabschnitte verschiedener Bauteile geführt sind. Es ist aber auch denkbar, dass mehrere Führungsabschnitte in einer einzigen Nut bzw. einer einzigen Linearführungseinrichtung geführt werden.

Besonders vorteilhaft ist eine Ausgestaltung der Erfindung, bei der das Anschlags- und Führungselement einen ersten Anschlag aufweist, welcher zur Begrenzung der Bewegung in einer ersten Drehrichtung zum Öffnen der Klappe mit einem ersten bezüglich eines Gehäuses der Vorrichtung ortsfesten Gegenanschlag zusammenwirkt, d.h. in einer Anlagestellung ist.

Der Mitnehmer kann zur Begrenzung der rotatorischen Bewegung in einer zweiten Drehrichtung zum Schließen der Klappe mit einem zweiten bezüglich des Gehäuses der Vorrichtung ortsfesten Gegenanschlag in einer Anlagestellung sein.

Der erste ortsfeste Gegenanschlag verhindert eine weitere rotatorische Bewegung bei der Schließbewegung, d.h. bei einer Bewegung der Klappe von der Öffnungs- in die Schließstellung. Denn sobald der erste Anschlag des Anschlags- und Führungselements mit dem ersten Gegenanschlag in Anlagestellung gelangt, ist eine weitere rotatorische Bewegung nicht mehr möglich. Der elektromotorische Antrieb bewirkt zunächst noch ein Weiterdrehen der Kulissenscheiben. Die Führungsscheibe kann sich in dieser Stellung nicht mehr weiterdrehen, da dies durch das mit der Führungsscheibe gekoppelte Anschlags- und Führungselement verhindert wird.

Die Mitnehmer können sich nun nur noch in den Führungsabschnitten des Anschlags- und Führungselements verlagern, indem diese Mitnehmer sich voneinander wegbewegen. Der Mitnehmer des Halte- und Führungselements gelangt dann in Kontakt mit dem zweiten Gegenanschlag, insbesondere wird dieser Mitnehmer in der L-förmigen oder hakenförmigen Kontur des zweiten Gegenanschlags sicher aufgenommen. Die Klappe befindet sich in der Schließstellung.

Gemäß einer weiteren Variante der Erfindung weist das Anschlags- und Führungselement einen zweiten Anschlag zum Halten und Führen des Mitnehmers auf, wobei die Führungsstruktur und der Gegenanschlag derart ausgebildet sind, dass der Mitnehmer während der rotatorischen Bewegung der Klappe mittels des zweiten Anschlags in seiner Position in der Führungsstruktur gehalten und während der translatorischen Bewegung der Klappe in der Führungsstruktur verlagert wird.

Besonders vorteilhaft ist eine Variante, wobei die Führungsscheibe und die Kulissenscheibe jeweils eine Ausnehmung zum Durchstecken eines Abschnitts des Anschlags- und Führungselements mit dem zweiten Anschlag aufweisen. Insbesondere kann der zweite Anschlag des Anschlags- und Führungselements die Ausnehmung der Führungsscheibe durchdringen und in eine Ausnehmung der Kulissenscheibe eintauchen.

Auf diese Weise können die Kulissenscheibe und die Führungsscheibe miteinander gekoppelt werden.

In der Schließstellung der Klappe kann der Mitnehmer mit dem zweiten Gegenanschlag in Kontakt, insbesondere bereichsweise darin aufgenommen sein. Der zweite Gegenanschlag kann für eine lineare Zwangsführung des Mitnehmers im Wesentlichen L- oder U-förmig ausgebildet sein, wobei der Mitnehmer in der im Wesentlichen L- oder U-förmig ausgebildeten Struktur des Gegenanschlags aufnehmbar ist. Der zweite Gegenanschlag kann auch als hakenförmig bezeichnet werden, wobei der Mitnehmer im gebogenen Bereich des Hakens aufgenommen bzw. gehalten werden kann.

Im Falle der L-förmigen Ausgestaltung weist der zweite Gegenanschlag einen langen und einen kurzen Schenkel auf, wobei der Mitnehmer während der translatorischen Bewegung der Klappe zwischen den Schenkeln aufgenommen ist. Auf diese Weise wird eine zunächst ungewollte rotatorische Bewegung verhindert, um lediglich eine translatorische Bewegung zu gewährleisten. Für den Fall, dass der Mitnehmer bolzenförmig ausgebildet ist, kann dieser in einer entsprechenden Gegenform des Schenkels eingelegt bzw. geführt und gehalten sein.

Die L-förmige Kontur kann auch als Haken oder Einhängung für den Mitnehmer bezeichnet werden. Dieser zweite Gegenanschlag ist ortsfest bezüglich des Gehäuses ausgebildet. Insbesondere sorgt dieser Gegenanschlag bzw. dieser Haken für eine definierte Lage des Mitnehmers in der Schließstellung und damit für eine Versteifung der Vorrichtung. Die Kontur des Gegenanschlags sorgt für Stabilität während der Schließstellung.

Das Halte- und Führungselement und das Anschlags- und Führungselement können bei Bewegung der Kulissenscheibe im Bereich der Linearverstellung, insbesondere während der translatorischen Verstellung der Klappe, d.h. der translatorischen Phase, gegenläufige Bewegungen ausführen.

Insbesondere kann vorgesehen sein, dass das Halte- und Führungselement und das Anschlags- und Führungselement bei einer Bewegung von der Schließstellung in die Öffnungsstellung, insbesondere während der translatorischen Bewegung, sich aufeinander zu bewegen, und bei einer Bewegung von der Öffnungsstellung in die Schließstellung, insbesondere während der translatorischen Bewegung, sich voneinander wegbewegen.

Zur Verhinderung einer ungewollten rotatorischen Bewegung der Klappe sind der erste Anschlag und der erste Gegenanschlag in Kontakt miteinander.

Gemäß einer vorteilhaften Ausgestaltung ist es denkbar, dass der Mitnehmer der Klappe und der weitere Mitnehmer des Anschlags- und Führungselements Führungsabschnitte in der Führungsscheibe durchdringen und für eine Kopplung mit der Kulissenscheibe in die Führungsstruktur eingreifen, wobei die Führungsabschnitte vorzugsweise als Langlöcher ausgebildet sind. Die Mitnehmer können als Bolzen oder Pin ausgebildet sein.

Durch die Kombination aus zentrisch angetriebener Kulissenführung, einer Linearführungseinrichtung und ortsfesten Gegenanschlägen werden die translatorische und rotatorische Bewegung der Klappe ermöglicht.

Mit anderen Worten kann insbesondere der Führungsabschnitt des Halte- und Führungselements den, beispielsweise bolzenförmigen Mitnehmer als Fortsatz aufweisen. Ferner kann das Halte- und Führungselement mittels des Führungsabschnitts in der Linearführungseinrichtung geführt sein.

Auch am Anschlags- und Führungselement kann ebenfalls ein bolzenförmiger Mitnehmer als Fortsatz ausgebildet sein, welcher auch als "weiterer" Mitnehmer bezeichnet wird. Zusätzlich können ein weiterer Bolzenabschnitt mit dem zweiten Anschlag und der Anschlag am Endbereich vorgesehen sein. Wie oben erwähnt, ist auch am Anschlags- und Führungselement ein Führungsabschnitt vorgesehen, welcher in der Linearführungseinrichtung geführt ist. Dieser Abschnitt kann in der gleichen Linearführungseinrichtung, beispielsweise zwischen den gleichen Führungsstegen, geführt sein, wie der Führungsabschnitt des Halte- und Führungselements. Es sind aber auch separate Linearführungseinrichtungen für jeden Abschnitt denkbar.

Nach der Montage der Vorrichtung können die Mitnehmer bzw. der Führungsabschnitt in den Nuten der Führungseinrichtung bzw. den Führungsstrukturen der Führungsscheibe und Kulissenscheibe angeordnet sein.

Die Führungsabschnitte des Halte- und Führungsbauteilelements und des Anschlags- und Führungselements können an der Rückseite der Führungsscheibe zwischen zwei oder mehreren parallel verlaufenden Stegen nach Art einer Linearführung angeordnet sein.

Wie erwähnt, kann die Antriebseinheit direkt auf den Antriebsfortsatz der Kulissenscheibe einwirken.

Zu Beginn der Antriebsbewegung, d.h. bei Öffnungsbewegung von der Schließ- in die Öffnungsstellung der Klappe wirkt zwar der elektromotorische Antrieb auf die Kulissenscheibe ein und bewirkt deren Drehung. Jedoch wird durch den Mitnehmer am Halte- und Führungselement sowie dem Anschlag am Anschlags- und Führungselement in Kombination mit den ortsfesten Gegenanschlägen eine rotatorische Bewegung der Klappe zunächst verhindert.

Denn durch die Zwangsführung des Halte- und Führungselements sowie des Anschlags- und Führungselements wird mittels der Führungsstruktur und über die Linearführungseinrichtung durch die Drehbewegung zunächst eine translatorische Bewegung der Klappe erzwungen.

Am Ende dieser translatorischen Bewegung, bei der sich das Halte- und Führungselement und das Anschlags- und Führungselement aufeinander zubewegen, sind der Mitnehmer und der Anschlag nicht mehr in einer Anlagestellung mit den ortsfesten Gegenanschlägen, und die Klappe wird in eine rotatorische Bewegung überführt und gibt damit den Zugang, beispielsweise zu einer Ladedose, frei.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigen zum Teil schematisch:
- Figur 1: eine perspektivische Darstellung einer Öffnungs- und Schließvorrichtung mit einer dreh- und/oder schwenkbar gelagerten Klappe in einer Schließstellung, a) in einer Ansicht von vorne und b) in einer Ansicht von hinten,
- Figur 2: die Vorrichtung gemäß Figur 1 in einer ersten Zwischenstellung, a) in einer Ansicht von vorne und b) in einer Ansicht von hinten,
- Figur 3: die Vorrichtung gemäß Figur 1 in einer zweiten Zwischenstellung, a) in einer Ansicht von vorne und b) in einer Ansicht von hinten,
- Figur 4: die Vorrichtung gemäß Figur 1 in einer dritten Zwischenstellung, a) in einer Ansicht von vorne und b) in einer Ansicht von hinten,
- Figur 5: die Vorrichtung gemäß Figur 1 in einer Offenstellung, a) in einer Ansicht von vorne und b) in einer Ansicht von hinten,
- Figur 6: die Vorrichtung gemäß Figur 1 in einer perspektivischen Explosionsdarstellung und
- Figur 7: die Vorrichtung gemäß Figur 1 in einer weiteren perspektivischen Explosionsdarstellung.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

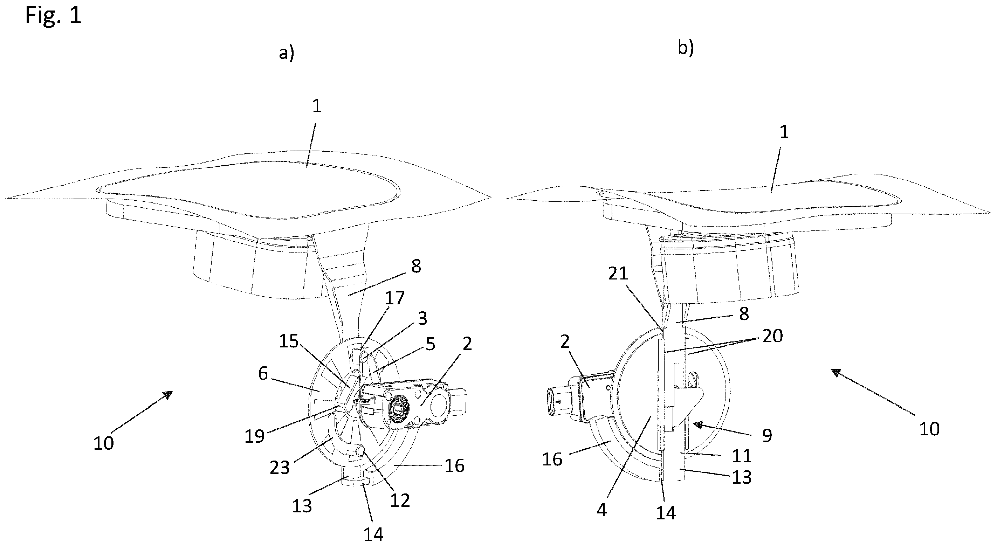

Figur 1 zeigt ein Ausführungsbeispiel einer erfindungsgemäßen Öffnungs- und Schließvorrichtung 10 für ein Kraftfahrzeug. Vorliegend handelt es sich um eine dreh- und/oder schwenkbar gelagerte Ladeklappe 1 für ein Elektrofahrzeug, welche eine Lademulde abdeckt.

Wie Figur 1 weiter zeigt, ist die Klappe 1 mit einem elektromotorischen Antrieb 2 zwischen einer Öffnungs- und einer Schließstellung mittels einer translatorischen und rotatorischen Bewegung verstellbar.

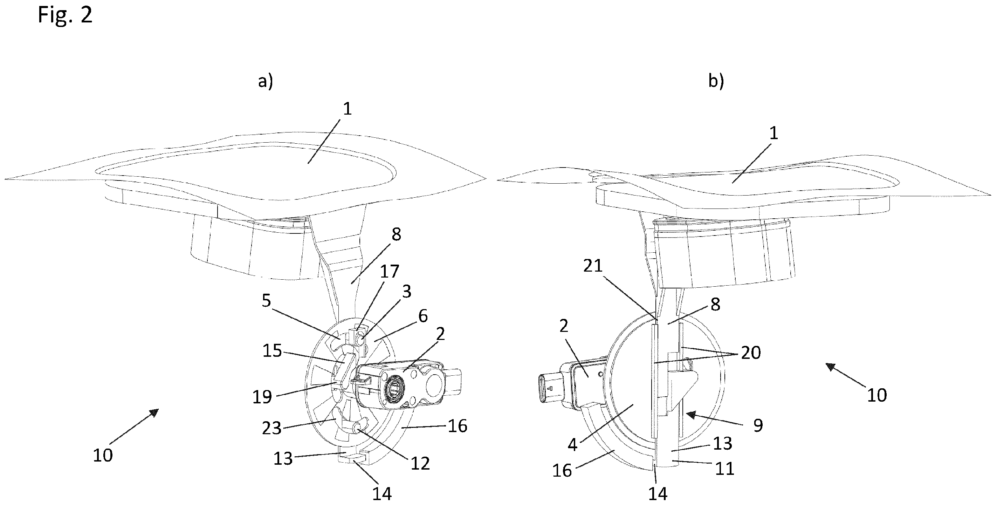

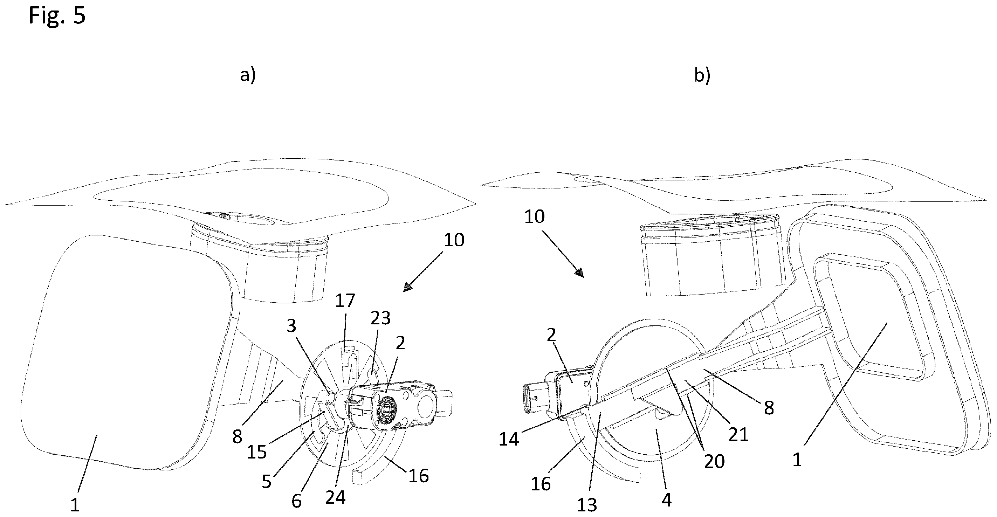

Die Figur 1 zeigt die vollständig geschlossene Stellung der Klappe 1 in zwei Ansichten. Die Figur 1 a) zeigt die Vorrichtung 10 in einer Ansicht von vorne und die Figur 1 b) zeigt die Vorrichtung 10 in einer Ansicht von hinten. Die Figuren 2 a) und b), 3 a) und b) und 4 a) und b) zeigen Zwischenstellungen der Klappe 1 zwischen der vollständig geschlossenen Stellung gemäß Figur 1 und der vollständig geöffneten Stellung gemäß den Darstellungen a) und b) der Figur 5.

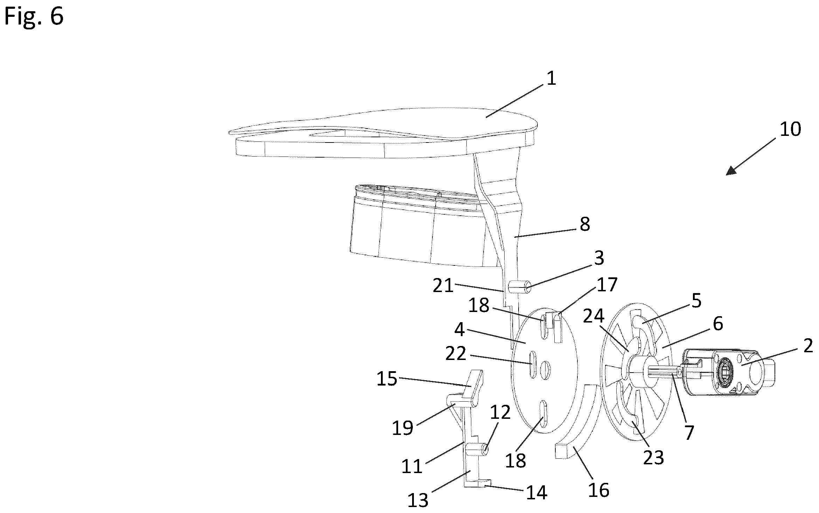

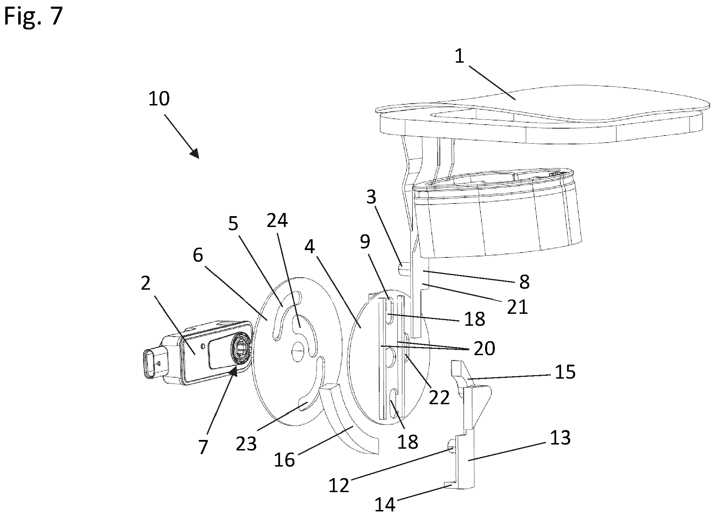

Aus den Figuren 6 und 7 geht die Vorrichtung 10 in jeweils einer perspektivischen Explosionsdarstellung hervor.

Um die translatorische und rotatorische Verstellbarkeit der Klappe 1 zu realisieren weist die Klappe 1 vorliegend einen bolzenförmigen Mitnehmer 3 auf, welcher für eine Verstellung der Klappe 1 in eine Führungsstruktur 5 einer zentrisch angetriebenen Kulissenscheibe 6 eingreift (vgl. Figuren 1 bis 7).

Darüber hinaus ist der Mitnehmer 3 in einem Führungsabschnitt 18 einer Führungsscheibe 4 verschiebbar gelagert.

Wie Figur 1, sowie auch die übrigen Figuren weiter zeigen, durchdringt der Mitnehmer 3 den als Langlöcher ausgebildeten Führungsabschnitt 18 der Führungsscheibe 4 und ragt in die Führungsstruktur 5 der Kulissenscheibe 6 ein. Der Mitnehmer 3 kann also in diesen beiden Strukturen 18, 5 verlagert werden. Der Führungsabschnitt 18 ist vorliegend als Langloch mit zusätzlicher Abstützfunktion bzw. Führungsfunktion für den Mitnehmer 3 ausgebildet, er kann auch als Öffnung oder Durchgangsloch ausgebildet sein.

Der einen Elektromotor aufweisende Antrieb 2 wirkt im hier vorliegenden Ausführungsbeispiel direkt auf einen Antriebsfortsatz 7 der Kulissenscheibe 6 ein, so dass die Kulissenscheibe 6 zur Verstellung der Klappe 1 eine Drehbewegung ausführt und der mit der Klappe 1 gekoppelte Mitnehmer 3 in der Führungsstruktur 5 verlagert wird, um zwischen der Öffnungs- und Schließstellung der Klappe 1 bewegt zu werden. Der Mitnehmer 3 wird darüber hinaus, je nach Position der Klappe 1, auch in dem Führungsabschnitt 18 der Führungsscheibe 4 verlagert.

Der Mitnehmer 3 wird derart in der Führungsstruktur 5 der Kulissenscheibe 6 und im Führungsabschnitt (Langlöcher) 18 der Führungsscheibe 4 verlagert, dass die Klappe 1 bei einer Bewegung von der geschlossenen Stellung in die geöffnete Stellung zunächst eine im Wesentlichen translatorische Bewegung und dann eine im Wesentlichen rotatorische Bewegung ausführt.

Die translatorische Bewegung dient dazu, die Klappe 1 aus der geschlossenen, mit der Karosserie bündigen Stellung, über eine Hubbewegung in eine zurückgezogene Stellung innerhalb der Fahrzeugkarosserie zu bewegen. In dieser zurückgezogenen Stellung geht die Hubbewegung in die rotatorische Schwenkbewegung über, wodurch die Klappe 1 innerhalb der Fahrzeugkarosserie bewegt wird und den Zugang, beispielsweise zur Ladedose des Elektrofahrzeugs freigibt.

Diese Bewegung ist in den Figuren 1 bis 5 zu erkennen. In Figur 1 befindet sich die Klappe 1 noch in der Schließstellung. Die Klappe 1 schließt bündig mit einem sie umgebenden Klappengehäuse, beispielsweise einem Teil einer Kraftfahrzeugkarosserie.

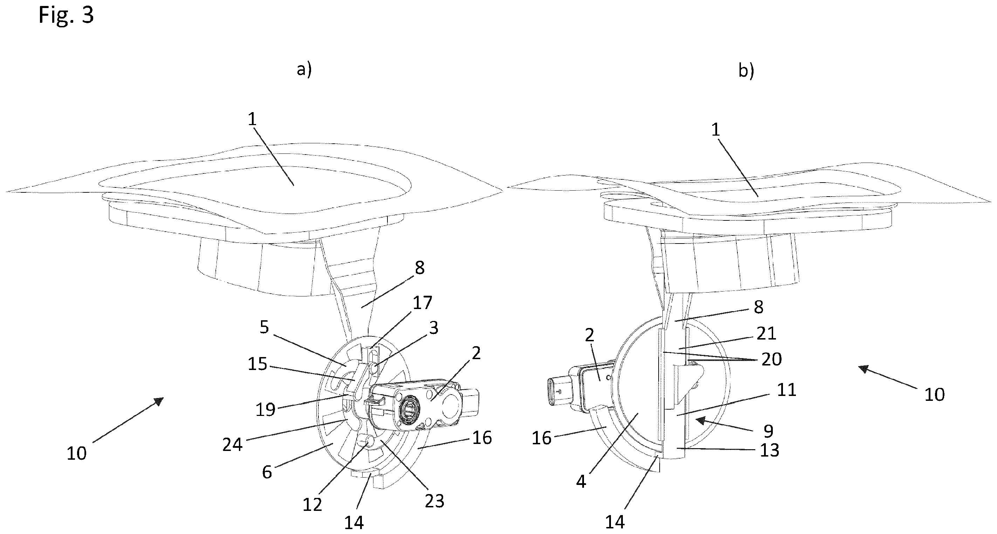

Die Figur 2 zeigt, dass sich die Klappe 1 gegenüber der Oberfläche der Karosserie etwas abgesenkt hat. In der Darstellung gemäß Figur 3 ist die Klappe 1 vollständig abgesenkt und die lineare Bewegung der Klappe 1 endet und geht in eine rotatorische Bewegung über.

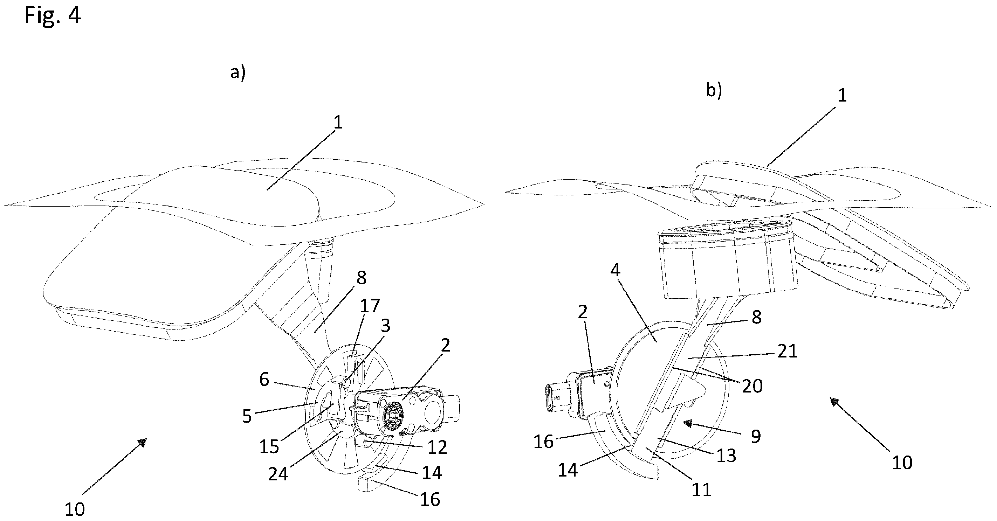

Gemäß Figur 4 ist die Klappe 1 verschwenkt und sie befindet sich in einer Zwischenstellung der rotatorischen Bewegung, ehe sie schließlich in die vollständig geöffnete Stellung gemäß Figur 5 gelangt.

Bei der umgekehrten Bewegung, also von der Öffnungsstellung in die Schließstellung führt die Klappe 1 zunächst eine rotatorische und dann eine lineare bzw. translatorische Bewegung aus, um in die vollständig geschlossene Position zu gelangen.

Figur 1 zeigt, dass der Mitnehmer 3 an einem Halte- und Führungselement 8 der Klappe 1 angeordnet ist, welcher auch als Arm oder Fortsatz bezeichnet werden kann. Dieses Halte- und Führungselement 8 erstreckt sich vorliegend im Wesentlichen senkrecht gegenüber der Klappe 1.

Wie insbesondere die Figur 1 sowie die Explosionsdarstellungen gemäß der Figuren 6 und 7 weiter zeigen, ist dieses Halte- und Führungselement 8 für eine lineare Zwangsführung mittels eines Führungsabschnitts 21 in einer vorliegend nutförmigen Linearführungseinrichtung 9 einer Führungsscheibe 4 der Klappe 1 geführt. Es ist auch denkbar, dass mehrere solcher Linearführungseinrichtungen 9 für unterschiedliche Bauteile vorgesehen sind.

Die Linearführungseinrichtung 9 ist auf der Rückseite der Führungsscheibe 4, d.h. auf der der Kulissenscheibe 6 abgewandten Seite, angeordnet.

Die Führungsabschnitte 13, 21 des Halte- und Führungselements 8 und des Anschlags- und Führungselements 11 sind demnach an der Rückseite der Führungsscheibe 4 zwischen vorliegend zwei parallel verlaufenden Führungsstegen 20 nach Art einer Linearführung angeordnet und in dieser Linearführung bewegbar.

Die Klappe 1, das Halte- und Führungselement 8 und der Führungsabschnitt 21 können einstückig ausgebildet sein.

Zur Realisierung der gewünschten Bewegungen der Klappe 1 weist die Vorrichtung 10 weiterhin ein Anschlags- und Führungselement 11 auf, welches mittels eines weiteren Mitnehmers 12 mit der Kulissenscheibe 6 und der Führungsscheibe 4 gekoppelt ist. Bei dem hier dargestellten Ausführungsbeispiel ist der Mitnehmer 3 und/oder der weitere Mitnehmer 12 durch einen Bolzen oder Pin gebildet. Der weitere Mitnehmer 12 wird in der Führungsstruktur 23 der Kulissenscheibe 6 verlagert und ist mit der Führungsscheibe 4 gekoppelt. Das Anschlags- und Führungselement 11 ist mit der Führungsscheibe 4 gekoppelt.

Wie die Figuren weiter zeigen, durchdringt der weitere Mitnehmer 12 den als Langlöcher ausgebildeten Führungsabschnitt 18 der Führungsscheibe 4 und ragt in die Führungsstruktur 5 der Kulissenscheibe 6 ein. Der weitere Mitnehmer 12 kann also, wie der Mitnehmer 3 auch, in diesen beiden Strukturen 18, 5 verlagert werden.

Aus den Figuren ist ebenfalls zu entnehmen, dass das Anschlags- und Führungselement 11 den in der Linearführungseinrichtung 9 der Führungsscheibe 4 geführten Führungsabschnitt 13 für die lineare Zwangsführung des Anschlags- und Führungselement 11 aufweist.

Mit anderen Worten wird das Anschlags- und Führungselement 11 mittels des Führungsabschnitts 13 in der vorliegend nutförmig ausgebildeten Linearführungseinrichtung 9 geführt, d.h. das Anschlags- und Führungselement 11 kann linear nach oben und nach unten bewegt bzw. geführt werden.

Weiterhin weist das Anschlags- und Führungselement 11 einen ersten Anschlag 14 auf welcher zur Begrenzung der Bewegung in einer ersten Drehrichtung zum Öffnen der Klappe 1 mit einem ersten bezüglich eines Gehäuses der Vorrichtung 10 ortsfesten Gegenanschlag 16 zusammenwirkt, d.h. in einer Anlagestellung ist. Diese Stellung wird in der Figur 1 a) besonders deutlich, in welcher sich die Klappe 1 in Schließstellung befindet. Auf diese Weise wird ein Weiterdrehen des Anschlags- und Führungselements 11 verhindert. Es ist lediglich eine translatorische Bewegung der Klappe 1 möglich. Dies verdeutlicht auch die Figur 2, in welcher sich der Anschlag 14 und der Gegenanschlag 16 noch in Anlagestellung befinden, die Klappe 1 aber bereits linear verstellt wurde.

In der Darstellung gemäß Figur 3 befindet sich der Anschlag 14 nicht mehr in Anlagestellung mit dem Gegenanschlag 16. Denn aufgrund der linearen Bewegung des Anschlags- und Führungselements 11 nach oben wird auch der Anschlag 14 nach oben bewegt und ist somit nicht mehr in Anlagestellung mit dem ortsfesten Gegenanschlag 16. Eine Rotationsbewegung der Kulissenscheibe 6 und der Klappe 1 ist nun möglich.

Die Figuren 4 und 5 zeigen die verschwenkte Klappe 1. Es wird auch deutlich, dass der Anschlag 14 nicht in Anlagestellung mit dem Gegenanschlag 16 ist, sondern sich frei drehen kann.

Oben wurde die Öffnungsbewegung der Klappe 1 von der Schließstellung (Figur 1) in die Öffnungsstellung (Figur 5) beschrieben. Die Schließbewegung geschieht in umgekehrter Reihenfolge, d.h. von einer zunächst rotatorischen in eine lineare Bewegung.

Der Mitnehmer 3 kann zur Begrenzung der rotatorischen Bewegung in einer zweiten Drehrichtung zum Schließen der Klappe mit einem zweiten bezüglich des Gehäuses der Vorrichtung 10 ortsfesten Gegenanschlag 17 in einer Anlagestellung sein. Dies wird in Figur 1 deutlich. Hier befindet sich der Mitnehmer 3 in Anlagestellung mit dem Gegenanschlag 17, welcher vorliegend hakenförmig mit einem gebogenen Bereich ausgebildet ist.

Wie die Figuren weiter zeigen, weist das Anschlags- und Führungselement 11 einen zweiten Anschlag 15 zum Halten und Führen des Mitnehmers 3 auf. Dies geht insbesondere aus den Figuren 6 und 7 hervor. Mit anderen Worten wirkt der zweite Anschlag 15 auf den Mitnehmer 3 ein, um diesen bei einer Schwenk- oder Drehbewegung der Klappe 1 in einer Position in der Führungsstruktur 5 der Kulissenscheibe 6 zu halten, damit sich die auf die Kulissenscheibe 6 ausgeübte Drehbewegung des Antriebs 2 direkt auf den Mitnehmer 3 und damit auf die Klappe 1 überträgt, ohne dass der Mitnehmer 3 in der Führungsstruktur 5 der Kulissenscheibe 6 verlagert wird.

In der Stellung gemäß Figur 1 befindet sich der Mitnehmer 3 in Anlagestellung mit dem Gegenanschlag 17. Er ist nicht in Anlagestellung mit dem zweiten Anschlag 15. In der Stellung gemäß Figur 2 wurde das mit der Klappe 1 verbundene Halte- und Führungselement 8 linear nach unten verlagert. Hierdurch bewegt sich auch der mit dem Halte- und Führungselement 8 verbundene Mitnehmer 3 nach unten und damit aus der Anlagestellung mit dem Gegenanschlag 17, insbesondere aus dem gebogenen Bereich des hakenförmigen Gegenanschlags 17 heraus.

In der Stellung gemäß Figur 3 ist der Mitnehmer 3 vollständig aus dem gebogenen Bereich des hakenförmigen Gegenanschlags 17 herausbewegt. In dieser Stellung gelangt der Mitnehmer 3 in Anlagestellung mit dem zweiten Anschlag 15, d.h. der Bolzen (Mitnehmer) 3 wird durch die Anlagefläche des zweiten Anschlags 15 in seiner Position gehalten.

Die Führungsstruktur 5 und der Führungsabschnitt 18 sind derart ausgebildet, dass der Mitnehmer 3 während der rotatorischen Bewegung der Klappe 1 mittels des zweiten Anschlags 15 in seiner Position in der Führungsstruktur 5 gehalten und während der translatorischen Bewegung der Klappe 1 in der Führungsstruktur 5 verlagert wird. Dies wird durch die Figuren 3, 4 und 5 verdeutlicht, welche die rotatorische Bewegung zeigen.

Der Antrieb 2 bewirkt eine Verdrehung der Kulissenscheibe 6, wobei der Mitnehmer 3 zwar durch den zweiten Anschlag 15 in seiner Position in der Führungsstruktur 5 der Kulissenscheibe 6 gehalten, aber aufgrund der Drehung der Kulissenscheibe 6 entsprechend verdreht wird, so dass in der Folge auch die Klappe 1 entsprechend verschwenkt wird.

Wie die Figur 1 und die Explosionsdarstellungen gemäß der Figuren 6 und 7 weiter zeigen, weist die Führungsscheibe 4 und die Kulissenscheibe 6 jeweils eine Ausnehmung 22, 24 zum Durchstecken eines Abschnitts 19 des Anschlags- und Führungselements 11 mit dem zweiten Anschlag 15 auf. Der zweite Anschlag 15 des Anschlags- und Führungselements 11 durchdringt die Ausnehmung 22 der Führungsscheibe 4 und taucht in die Ausnehmung 24 der Kulissenscheibe 6 ein. Auf diese Weise werden die Kulissenscheibe 6 und die Führungsscheibe 4 miteinander gekoppelt. Das Anschlags- und Führungselement 11 ist mit der Führungsscheibe 4 gekoppelt. Die Ausnehmung 22 dient somit als Öffnung zum Durchstecken von Teilen des Anschlags- und Führungselements 11 und darüber hinaus kann die Ausnehmung 22 auch Abstütz- und Führungsfunktionen für das Element 11 aufweisen.

In der Schließstellung der Klappe 1 (vgl. Figur 1) ist der Mitnehmer 3 mit dem zweiten Gegenanschlag 17 in Kontakt, insbesondere bereichsweise darin aufgenommen. Der zweite Gegenanschlag 17 ist vorliegend im Wesentlichen L-förmig ausgebildet, wobei der Mitnehmer 3 in der im Wesentlichen L-förmig ausgebildeten Struktur des Gegenanschlags 17 aufgenommen ist. Der zweite Gegenanschlag 17 kann auch als hakenförmig bezeichnet werden, wobei der Mitnehmer 3 in der Schließstellung im gebogenen Bereich des Hakens aufgenommen bzw. gehalten wird.

Der Mitnehmer 3 ist während der translatorischen Bewegung der Klappe zwischen den Schenkeln des L-förmigen Gegenanschlags 17 aufgenommen. Auf diese Weise wird eine zunächst ungewollte rotatorische Bewegung verhindert, um lediglich eine translatorische Bewegung zu gewährleisten.

Die L-förmige Kontur des zweiten Gegenanschlags 17 kann auch als Haken oder Einhängung für den Mitnehmer 3 bezeichnet werden. Dieser zweite Gegenanschlag 17 ist ortsfest bezüglich des Gehäuses der Vorrichtung 10 ausgebildet. Insbesondere sorgt dieser Gegenanschlag 17 bzw. dieser Haken für eine definierte Lage des Mitnehmers 3 in der Schließstellung und damit für eine Versteifung der Vorrichtung 10.

Das Halte- und Führungselement 8 und das Anschlags- und Führungselement 11 führen bei Bewegung der Kulissenscheibe 6 im Bereich der Linearverstellung, insbesondere während der translatorischen Verstellung der Klappe 1, d.h. der translatorischen Phase, gegenläufige Bewegungen aus (vgl. Figuren 1 bis 3).

Vorliegend bewegen sich das Halte- und Führungselement 8 und das Anschlags- und Führungselement 11 bei einer Bewegung von der Schließstellung in die Öffnungsstellung der Klappe, während der translatorischen Bewegung, aufeinander zu. Bei einer Verstellung der Klappe 1 von der Öffnungsstellung in die Schließstellung, während der translatorischen Bewegung, bewegen sie sich voneinander weg.

Wie erwähnt, sind zur Verhinderung einer ungewollten rotatorischen Bewegung der Klappe der erste Anschlag 14 und der erste Gegenanschlag 16 in Kontakt miteinander. Dies verdeutlicht die Darstellung in den Figuren 1 bis 3.

Der Mitnehmer 3 der Klappe 1 und der weitere Mitnehmer 12 des Anschlags- und Führungselements 11 durchdringen vorliegend Führungsabschnitte 18 in der Führungsscheibe 4 und greifen für eine Kopplung mit der Kulissenscheibe 6 in die Führungsstruktur 5 ein, wobei die Führungsabschnitte 18 vorliegend als Langlöcher ausgebildet sind.

Durch die Kombination aus zentrisch angetriebener Kulissenführung, einer Linearführungseinrichtung und ortsfesten Gegenanschlägen werden die translatorische und rotatorische Bewegung der Klappe 1 ermöglicht.

Mit anderen Worten weist vorliegend der Führungsabschnitt 21 des Halte- und Führungselements 8 den bolzenförmigen Mitnehmer als Fortsatz auf. Ferner ist das Halte- und Führungselement 8 mittels des Führungsabschnitts 21 in der Linearführungseinrichtung 9 geführt.

Auch am Anschlags- und Führungselement 11 ist ein bolzenförmiger Mitnehmer 12 als Fortsatz ausgebildet. Zusätzlich weist das Element 11 einen Abschnitt 19 mit dem zweiten Anschlag 14 auf. Wie oben erwähnt, ist auch am Anschlags- und Führungselement 11 ein Führungsabschnitt 13 vorgesehen, welcher in der Linearführungseinrichtung 9 geführt ist. Dieser Abschnitt 13 kann in der gleichen Linearführungseinrichtung 9, beispielsweise zwischen den gleichen Führungsstegen 20, geführt sein, wie der Führungsabschnitt 21 des Halte- und Führungselements 8. Es sind aber auch separate Linearführungseinrichtungen für jeden Abschnitt denkbar.

Die Führungsabschnitte 13, 21 des Halte- und Führungselements 8 und des Anschlags- und Führungselements 11 sind an der Rückseite der Führungsscheibe 4 zwischen zwei parallel verlaufenden Stegen 20 nach Art einer Linearführung angeordnet.

Wie erwähnt, wirkt die Antriebseinheit 2 direkt auf den Antriebsfortsatz 17 der Kulissenscheibe 6 ein.

Zu Beginn der Antriebsbewegung, d.h. bei Öffnungsbewegung von der Schließ- in die Öffnungsstellung der Klappe 1 wirkt zwar der elektromotorische Antrieb 2 auf die Kulissenscheibe 6 ein und bewirkt deren Drehung (vgl. Figuren 1 bis 3). Jedoch wird durch den Mitnehmer 3 am Halte- und Führungselement 8 sowie dem Anschlag 14 am Anschlags- und Führungselement 11 in Kombination mit den ortsfesten Gegenanschlägen 16, 17 eine rotatorische Bewegung der Klappe 1 zunächst verhindert.

Denn durch die Zwangsführung des Halte- und Führungselements 8 sowie des Anschlags- und Führungselements 11 wird mittels der Führungsstruktur 5 und über die Linearführungseinrichtung 9 durch die Drehbewegung zunächst eine translatorische Bewegung der Klappe 1 erzwungen.

Am Ende dieser translatorischen Bewegung, bei der sich das Halte- und Führungselement 8 und das Anschlags- und Führungselement 11 aufeinander zubewegen, sind der Mitnehmer 3 und der Anschlag 14 nicht mehr in einer Anlagestellung mit den ortsfesten Gegenanschlägen 16, 17, und die Klappe 1 wird in eine rotatorische Bewegung überführt und gibt damit den Zugang, beispielsweise zu einer Ladedose, frei.

### Bezugszeichenliste

- 1: Klappe
- 2: Elektromotorischer Antrieb
- 3: Mitnehmer
- 4: Führungsscheibe
- 5: Führungsstruktur
- 6: Kulissenscheibe
- 7: Antriebsfortsatz
- 8: Halte- und Führungselement
- 9: Linearführungseinrichtung / Nut
- 10: Öffnungs- und Schließvorrichtung
- 11: Anschlags- und Führungselement
- 12: weiterer Mitnehmer
- 13: Führungsabschnitt des Anschlags- und Führungselements
- 14: erster Anschlag
- 15: zweiter Anschlag
- 16: erster Gegenanschlag
- 17: zweiter Gegenanschlag
- 18: Führungsabschnitt
- 19: Abschnitt
- 20: Führungssteg
- 21: Führungsabschnitt des Halte- und Führungselements
- 22: Ausnehmung Führungsscheibe
- 23: Führungsstruktur
- 24: Ausnehmung Kulissenscheibe

## Patentansprüche

1. Öffnungs- und Schließvorrichtung (10) für ein Kraftfahrzeug, umfassend eine dreh- und/oder schwenkbar gelagerte Klappe (1), insbesondere Ladeklappe für ein Elektrofahrzeug, wobei die Klappe (1) mit einem elektromotorischen Antrieb (2) zwischen einer Öffnungs- und einer Schließstellung mittels einer translatorischen und rotatorischen Bewegung verstellbar ist, wobei die Klappe (1) wenigstens einen Mitnehmer (3) aufweist, welcher für eine Verstellung der Klappe (1) in eine Führungsstruktur (5) einer, vorzugsweise zentrisch angetriebenen, Kulissenscheibe (6) eingreift, **dadurch gekennzeichnet, dass** der Mitnehmer (3) in einem Führungsabschnitt (18) einer Führungsscheibe (4) verschiebbar gelagert ist, wobei der Antrieb (2), vorzugsweise direkt, auf einen Antriebsfortsatz (7) der Kulissenscheibe (6) einwirkt, so dass die Kulissenscheibe (6) zur Verstellung der Klappe (1) eine Drehbewegung ausführt und der mit der Klappe (1) gekoppelte Mitnehmer (3) in der Führungsstruktur (5) der Kulissenscheibe (6) und/oder in dem Führungsabschnitt (18) der Führungsscheibe (4) verlagert wird.

2. Öffnungs- und Schließvorrichtung (10) nach Anspruch 1, **dadurch gekennzeichnet, dass** die Führungsstruktur (5) der Kulissenscheibe (6) und der Führungsabschnitt (18) der Führungsscheibe (4) zur Verlagerung des Mitnehmers (3) derart ausgebildet sind, dass die mit dem Mitnehmer (3) verbundene Klappe (1) bei einer Bewegung von der Schließstellung in die Öffnungsstellung zunächst eine im Wesentlichen translatorische Bewegung und dann eine im Wesentlichen rotatorische Bewegung ausführt, und dass die Klappe (1) bei einer Bewegung von der Öffnungsstellung in die Schließstellung zunächst eine im Wesentlichen rotatorische und dann eine im Wesentlichen translatorische Bewegung ausführt.

3. Öffnungs- und Schließvorrichtung (10) nach Anspruch 1 oder 2, **dadurch gekennzeichnet, dass** der wenigstens eine Mitnehmer (3) an einem Halte- und Führungselement (8) der Klappe (1) angeordnet ist, welcher sich vorzugsweise im Wesentlichen senkrecht gegenüber der Klappe (1) erstreckt, wobei das Halte- und Führungselement (8) mittels eines Führungsabschnitts (21) in wenigstens einer, vorzugsweise nutförmigen, Linearführungseinrichtung (9) der Führungsscheibe (4) für eine lineare Zwangsführung der Klappe (1) geführt ist.

4. Öffnungs- und Schließvorrichtung (10) nach Anspruch 3, **dadurch gekennzeichnet, dass** die Vorrichtung (10) ein Anschlags- und Führungselement (11) mit wenigstens einem weiteren Mitnehmer (12) aufweist, welcher in einer Führungsstruktur (23) der Kulissenscheibe (6) verlagerbar und mit der Führungsscheibe (4) gekoppelt ist, wobei das Anschlags- und Führungselement (11) einen in der Linearführungseinrichtung (9) geführten Führungsabschnitt (13) für die lineare Zwangsführung des Anschlags- und Führungselement (11) aufweist.

5. Öffnungs- und Schließvorrichtung (10) nach einem der vorherigen Ansprüche, **dadurch gekennzeichnet, dass** das Anschlags- und Führungselement (11) einen ersten Anschlag (14) aufweist, welcher zur Begrenzung der rotatorischen Bewegung in einer ersten Drehrichtung zum Öffnen der Klappe (1) mit einem ersten bezüglich eines Gehäuses der Vorrichtung (10) ortsfesten Gegenanschlag (16) in einer Anlagestellung ist.

6. Öffnungs- und Schließvorrichtung (10) nach einem der vorherigen Ansprüche, **dadurch gekennzeichnet, dass** der Mitnehmer (3) zur Begrenzung der rotatorischen Bewegung in einer zweiten Drehrichtung zum Schließen der Klappe (1) mit einem zweiten bezüglich des Gehäuses der Vorrichtung (10) ortsfesten Gegenanschlag (17) in einer Anlagestellung ist.

7. Öffnungs- und Schließvorrichtung (10) nach einem der vorherigen Ansprüche, **dadurch gekennzeichnet, dass** das Anschlags- und Führungselement (11) einen zweiten Anschlag (15) zum Halten und Führen des Mitnehmers (3) aufweist, wobei die Führungsstruktur (23) und der Gegenanschlag (16) derart ausgebildet sind, dass der Mitnehmer (3) während der rotatorischen Bewegung der Klappe (1) mittels des zweiten Anschlags (15) in seiner Position in der Führungsstruktur (5) gehalten und während der translatorischen Bewegung der Klappe (1) in der Führungsstruktur (5) verlagert wird.

8. Öffnungs- und Schließvorrichtung (10) nach einem der vorherigen Ansprüche, **dadurch gekennzeichnet, dass** die Führungsscheibe (4) und die Kulissenscheibe (6) jeweils eine Ausnehmung (22, 24) zum Durchstecken eines Abschnitts (19) des Anschlags- und Führungselements (11) mit dem zweiten Anschlag (15) aufweisen.

9. Öffnungs- und Schließvorrichtung (10) nach einem der vorherigen Ansprüche, **dadurch gekennzeichnet, dass** der Mitnehmer (3) in der Schließstellung der Klappe (1) mit dem zweiten Gegenanschlag (17) in Kontakt ist, insbesondere bereichsweise darin aufgenommen ist.

10. Öffnungs- und Schließvorrichtung (10) nach einem der vorherigen Ansprüche, **dadurch gekennzeichnet, dass** der zweite Gegenanschlag (17) für eine lineare Zwangsführung des Mitnehmers (3) im Wesentlichen L- oder U-förmig ausgebildet ist, wobei der Mitnehmer (3) in der im Wesentlichen L- oder U-förmig ausgebildeten Struktur des Gegenanschlags (17) aufnehmbar ist.

11. Öffnungs- und Schließvorrichtung (10) nach einem der vorherigen Ansprüche, **dadurch gekennzeichnet, dass** das Halte- und Führungselement (8) und das Anschlags- und Führungselement (11) bei Bewegung der Kulissenscheibe (6) im Bereich der Linearverstellung, insbesondere während der translatorischen Verstellung der Klappe, gegenläufige Bewegungen ausführen, insbesondere, dass das Halte- und Führungselement (8) und das Anschlags- und Führungselement (11) bei einer Bewegung von der Schließstellung in die Öffnungsstellung, insbesondere während der translatorischen Bewegung, sich aufeinander zu bewegen, und bei einer Bewegung von der Öffnungsstellung in die Schließstellung, insbesondere während der translatorischen Bewegung, sich voneinander wegbewegen.

12. Öffnungs- und Schließvorrichtung (10) nach einem der vorherigen Ansprüche, **dadurch gekennzeichnet, dass** der Mitnehmer (3) der Klappe (1) und der weitere Mitnehmer (12) des Anschlags- und Führungselements (11) Führungsabschnitte (18) in der Führungsscheibe (4) durchdringen und für eine Kopplung mit der Kulissenscheibe (4) in die Führungsstruktur (5) eingreifen, wobei die Führungsabschnitte (18) vorzugsweise als Langlöcher ausgebildet sind.

13. Öffnungs- und Schließvorrichtung (10) nach einem der vorherigen Ansprüche, **dadurch gekennzeichnet, dass** der Mitnehmer (3) und/oder der weitere Mitnehmer (12) durch einen Bolzen oder Pin gebildet sind.

14. Öffnungs- und Schließvorrichtung (10) nach einem der vorherigen Ansprüche, **dadurch gekennzeichnet, dass** die Klappe (1) als Ladeklappe für eine elektrische Lademulde ausgebildet ist.

## Claims

1. Opening and closing device (10) for a motor vehicle, comprising a rotatably and/or pivotably mounted flap (1), in particular charging flap for an electric vehicle, the flap (1) being adjustable with an electromotive drive (2) between an open and a closed position by means of a translational and rotational movement, and the flap (1) having at least one driver (3) which, for an adjustment of the flap (1), engages in a guide structure (5) of a, preferably centrally driven, slotted disc (6), **characterized in that** the driver (3) is mounted displaceably in a guide portion (18) of a guide disc (4), wherein the drive (2) acts, preferably directly, on a drive extension (7) of the slotted disc (6) such that the slotted disc (6) carries out a rotational movement for adjusting the flap (1) and the driver (3), which is coupled to the flap (1), is moved in the guide structure (5) of the slotted disc (6) and/or in the guide portion (18) of the guide disc (4).

2. Opening and closing device (10) according to Claim 1, **characterized in that**, for the movement of the driver (3), the guide structure (5) of the slotted disc (6) and the guide portion (18) of the guide disc (4) are designed in such a way that, during a movement from the closed position into the open position, the flap (1), which is connected to the driver (3), first of all carries out a substantially translational movement and then a substantially rotational movement, and **in that**, during a movement from the open position into the closed position, the flap (1) first of all carries out a substantially rotational and then a substantially translational movement.

3. Opening and closing device (10) according to Claim 1 or 2, **characterized in that** the at least one driver (3) is arranged on a holding and guide element (8) of the flap (1), which preferably extends substantially perpendicular to the flap (1), the holding and guide element (8) being guided by means of a guide portion (21) in at least one, preferably groove-shaped, linear guide means (9) of the guide disc (4) for a linear forced guidance of the flap (1).

4. Opening and closing device (10) according to Claim 3, **characterized in that** the device (10) has a stop and guide element (11) with at least one further driver (12), which is movable in a guide structure (23) of the slotted disc (6) and is coupled to the guide disc (4), the stop and guide element (11) having a guide portion (13), which is guided in the linear guide means (9), for the linear forced guidance of the stop and guide element (11).

5. Opening and closing device (10) according to any one of the preceding claims, **characterized in that** the stop and guide element (11) has a first stop (14) which, for limiting the rotational movement in a first direction of rotation for opening the flap (1), is in a contact position with a first counterstop (16), which is positionally fixed with respect to a housing of the device (10).

6. Opening and closing device (10) according to any one of the preceding claims, **characterized in that**, for limiting the rotational movement in a second direction of rotation for closing the flap (1), the driver (3) is in a contact position with a second counterstop (17), which is positionally fixed with respect to the housing of the device (10).

7. Opening and closing device (10) according to any one of the preceding claims, **characterized in that** the stop and guide element (11) has a second stop (15) for holding and guiding the driver (3), the guide structure (23) and the counterstop (16) being designed in such a way that, during the rotational movement of the flap (1), the driver (3) is held in its position in the guide structure (5) by means of the second stop (15) and, during the translational movement of the flap (1), is moved in the guide structure (5).

8. Opening and closing device (10) according to any one of the preceding claims, **characterized in that** the guide disc (4) and the slotted disc (6) each have a recess (22, 24) for inserting a portion (19) of the stop and guide element (11) with the second stop (15).

9. Opening and closing device (10) according to any one of the preceding claims, **characterized in that**, in the closed position of the flap (1), the driver (3) is in contact with the second counterstop (17), in particular is partially accommodated therein.

10. Opening and closing device (10) according to any one of the preceding claims, **characterized in that**, for a linear forced guidance of the driver (3), the second counterstop (17) is substantially L- or U-shaped, with the driver (3) being able to be accommodated in the substantially L- or U-shaped structure of the counterstop (17).

11. Opening and closing device (10) according to any one of the preceding claims, **characterized in that**, during movement of the slotted disc (6) within the linear adjustment range, in particular during the translational adjustment of the flap, the holding and guide element (8) and the stop and guide element (11) carry out opposed movements, in particular **in that**, during a movement from the closed position into the open position, in particular during the translational movement, the holding and guide element (8) and the stop and guide element (11) move towards each other, and move away from each other during a movement from the open position into the closed position, in particular during the translational movement.

12. Opening and closing device (10) according to any one of the preceding claims, **characterized in that** the driver (3) of the flap (1) and the further driver (12) of the stop and guide element (11) penetrate guide portions (18) in the guide disc (4) and, for coupling with the slotted disc (4), engage in the guide structure (5), the guide portions (18) preferably being in the form of elongated holes.

13. Opening and closing device (10) according to any one of the preceding claims, **characterized in that** the driver (3) and/or the further driver (12) are formed by a bolt or pin.

14. Opening and closing device (10) according to any one of the preceding claims, **characterized in that** the flap (1) is in the form of a charging flap for an electric charging housing.

## Revendications

1. Dispositif d'ouverture et de fermeture (10) pour un véhicule automobile comprenant un hayon rotatif et/ou pivotant (1), en particulier un hayon de chargement pour un véhicule électrique, le hayon (1) étant réglable par un mouvement de translation et de rotation à l'aide d'un entraînement (2) par moteur électrique entre une position d'ouverture et une position de fermeture, le hayon (1) présentant au moins un ergot d'entraînement (3) qui s'engage dans une structure de guidage (5) d'un disque à coulisse (6), de préférence entraîné de manière centrale, pour un réglage du hayon (1), **caractérisé en ce que** l'ergot d'entraînement (3) est monté de manière à être déplaçable dans une section de guidage (18) d'un disque de guidage (4), l'entraînement (2) agissant, de préférence directement, sur un prolongement d'entraînement (7) du disque à coulisse (6), de sorte que le disque à coulisse (6) effectue un mouvement de rotation pour le réglage du hayon (1) et que l'ergot d'entraînement (3) couplé au hayon (1) est déplacé dans la structure de guidage (5) du disque à coulisse (6) et/ou dans la section de guidage (18) du disque de guidage (4).

2. Dispositif d'ouverture et de fermeture (10) selon la revendication 1, **caractérisé en ce que** la structure de guidage (5) du disque à coulisse (6) et la section de guidage (18) du disque de guidage (4) sont conçues pour déplacer l'ergot d'entraînement (3) de telle sorte que le hayon (1) relié à l'ergot d'entraînement (3), lors d'un mouvement de la position de fermeture à la position d'ouverture, exécute d'abord un mouvement sensiblement de translation et ensuite un mouvement sensiblement de rotation, et **en ce que** le hayon (1), lors d'un mouvement de la position d'ouverture à la position de fermeture, exécute d'abord un mouvement sensiblement de rotation et ensuite un mouvement sensiblement de translation.

3. Dispositif d'ouverture et de fermeture (10) selon l'une des revendications 1 ou 2, **caractérisé en ce que** l'au moins un ergot d'entraînement (3) est disposé sur un élément de maintien et de guidage (8) du hayon (1), lequel s'étend de préférence sensiblement perpendiculairement au hayon (1), l'élément de maintien et de guidage (8) étant guidé au moyen d'une section de guidage (21) dans au moins un dispositif de guidage linéaire (9), de préférence en forme de rainure, du disque de guidage (4) pour un guidage forcé linéaire du hayon (1).

4. Dispositif d'ouverture et de fermeture (10) selon la revendication 3, **caractérisé en ce que** le dispositif (10) comporte un élément de butée et de guidage (11) pourvu d'au moins un autre ergot d'entraînement (12), qui peut être déplacé dans une structure de guidage (23) du disque à coulisse (6) et est couplé au disque de guidage (4), l'élément de butée et de guidage (11) présentant une section de guidage (13) guidée dans le dispositif de guidage linéaire (9) pour le guidage forcé linéaire de l'élément de butée et de guidage (11).

5. Dispositif d'ouverture et de fermeture (10) selon l'une quelconque des revendications précédentes, **caractérisé en ce que** l'élément de butée et de guidage (11) comporte une première butée (14) qui est en position d'appui avec une première contre-butée (16) fixe par rapport à un boîtier du dispositif (10) pour limiter le mouvement de rotation dans un premier sens de rotation destiné à ouvrir le hayon (1).

6. Dispositif d'ouverture et de fermeture (10) selon l'une quelconque des revendications précédentes, **caractérisé en ce que** l'ergot d'entraînement (3) est en position d'appui avec une deuxième contre-butée (17) fixe par rapport au boîtier du dispositif (10) pour limiter le mouvement de rotation dans un deuxième sens de rotation destiné à fermer le hayon (1).

7. Dispositif d'ouverture et de fermeture (10) selon l'une quelconque des revendications précédentes, **caractérisé en ce que** l'élément de butée et de guidage (11) comporte une deuxième butée (15) pour maintenir et guider l'ergot d'entraînement (3), la structure de guidage (23) et la contre-butée (16) étant conçues de telle sorte que l'ergot d'entraînement (3) est maintenu dans sa position dans la structure de guidage (5) au moyen de la deuxième butée (15) pendant le mouvement de rotation du hayon (1) et est déplacé dans la structure de guidage (5) pendant le mouvement de translation du hayon (1).

8. Dispositif d'ouverture et de fermeture (10) selon l'une quelconque des revendications précédentes, **caractérisé en ce que** le disque de guidage (4) et le disque à coulisse (6) comportent chacun un évidement (22, 24) à travers lequel passe une section (19) de l'élément de butée et de guidage (11) avec la deuxième butée (15).

9. Dispositif d'ouverture et de fermeture (10) selon l'une quelconque des revendications précédentes, **caractérisé en ce que** l'ergot d'entraînement (3) est en contact avec la deuxième contre-butée (17) dans la position de fermeture du hayon (1), et en particulier y est reçu par zones.

10. Dispositif d'ouverture et de fermeture (10) selon l'une quelconque des revendications précédentes, **caractérisé en ce que** la deuxième contre-butée (17) pour un guidage forcé linéaire de l'ergot d'entraînement (3) est sensiblement en forme de L ou en U, l'ergot d'entraînement (3) pouvant être reçu dans la structure sensiblement en forme de L ou en U de la contre-butée (17).

11. Dispositif d'ouverture et de fermeture (10) selon l'une quelconque des revendications précédentes, **caractérisé en ce que** l'élément de maintien et de guidage (8) et l'élément de butée et de guidage (11) exécutent des mouvements en sens opposés lors du mouvement du disque à coulisse (6) dans la zone du réglage linéaire, en particulier pendant le réglage en translation du hayon, en particulier **en ce que** l'élément de maintien et de guidage (8) et l'élément de butée et de guidage (11) se rapprochent l'un de l'autre lors d'un mouvement de la position de fermeture à la position d'ouverture, en particulier pendant le mouvement de translation, et s'éloignent l'un de l'autre lors d'un mouvement de la position d'ouverture à la position de fermeture, en particulier pendant le mouvement de translation.

12. Dispositif d'ouverture et de fermeture (10) selon l'une quelconque des revendications précédentes, **caractérisé en ce que** l'ergot d'entraînement (3) du hayon (1) et l'autre ergot d'entraînement (12) de l'élément de butée et de guidage (11) traversent les sections de guidage (18) dans le disque de guidage (4) et s'engagent dans la structure de guidage (5) pour un couplage avec le disque à coulisse (4), les sections de guidage (18) étant de préférence conçues sous forme de trous oblongs.

13. Dispositif d'ouverture et de fermeture (10) selon l'une quelconque des revendications précédentes, **caractérisé en ce que** l'ergot d'entraînement (3) et/ou l'autre ergot d'entraînement (12) sont formés par un boulon ou une broche.

14. Dispositif d'ouverture et de fermeture (10) selon l'une quelconque des revendications précédentes, **caractérisé en ce que** le hayon (1) est conçu sous forme de hayon de chargement pour un berceau de chargement électrique.
